**Europäisches Patentamt**

(19) **European Patent Office**

**Office européen des brevets**

(11) Veröffentlichungsnummer: **0 144 045**
**B1**

(12) **EUROPÄISCHE PATENTSCHRIFT**

(45) Veröffentlichungstag der Patentschrift:
12.08.87

(51) Int. Cl.⁴: **C 08 F 6/12**

(21) Anmeldenummer: **84114107.0**

(22) Anmeldetag: **22.11.84**

(54) **Verfahren zur Isolierung von pulverförmigen, chlorierten, aliphatischen Polymeren aus ihren aliphatischen Chlorkohlenwasserstofflösungen.**

(30) Priorität: **30.11.83 DE 3343322**

(43) Veröffentlichungstag der Anmeldung:
**12.06.85 Patentblatt 85/24**

(45) Bekanntmachung des Hinweises auf die Patenterteilung:
**12.08.87 Patentblatt 87/33**

(84) Benannte Vertragsstaaten:
**DE GB IT**

(56) Entgegenhaltungen:
**EP-A-0 001 590**
**EP-A-0 026 892**
**FR-A-1 424 790**
**FR-A-2 398 761**

(73) Patentinhaber: **BAYER AG, Konzernverwaltung RP Patentabteilung, D-5090 Leverkusen 1 Bayerwerk (DE)**

(72) Erfinder: **Meyer, Karl-Heinrich, Dr., Deswatinesstrasse 89, D-4150 Krefeld (DE)**
Erfinder: **Heine, Diez, Alkenrather Strasse 15, D-5090 Leverkusen (DE)**
Erfinder: **Alfes, Franz, Dr., Kruse Bömke 7, D-4150 Krefeld (DE)**
Erfinder: **Eisermann, Wolfgang, Dr., An den Kämpen 25, D-4000 Düsseldorf 31 (DE)**

## Beschreibung

Die Erfindung betrifft ein verbessertes Verfahren zur Isolierung von pulverförmigen, chlorierten, aliphatischen Polymeren aus ihren aliphatischen Chlorkohlenwasserstofflösungen. Das Verfahren liefert ein Produkt, das praktisch frei ($\leqslant$ 20 ppm) von toxischen aliphatischen Chlorkohlenwasserstoffen ist und gefahrlos in Anstrichfarben, Klebstoffen oder Druckfarben eingesetzt werden kann.

Es ist bekannt, aliphatische Polymere wie Naturkautschuk, Polyisopren, Polybutadien, Polyethylen, Polypropylen und Polyethylenpropylen-Mischpolymerisate bis zu Chlorgehalten von 30 bis 70 Gew.-% zu chlorieren, indem man gasförmiges Chlor in eine Lösung des Polymeren in einem aliphatischen Chlorkohlenwasserstoff bei 60 bis 120°C einleitet. Bevorzugtes Lösungsmittel ist Tetrachlorkohlenstoff, der sich wegen seiner hohen Chlorbeständigkeit zwar besonders gut eignet, aber aus Gründen der Ökologie besondere Vorsichtsmaßnahmen erfordert. Aus der Lösung des Polymeren im chlorbeständigen organischen Lösungsmittel kann man nach Abschluß der Chlorierung das Polymer in fester Form zurückgewinnen, indem man das Gemisch mit heißem Wasser oder Dampf behandelt. Ein Teil des verwendeten organischen Lösungsmittels destilliert dabei ab, das chlorierte Polymere fällt aus und kann abfiltriert werden. Das primär erhaltene Produkt enthält dann etwa 30 bis 60 Gew.-% Wasser, neben erheblichen Restmengen des organischen Lösungsmittels. Auch durch Trocknen dieses Produktes im Vakuum oder im Gasstrom wird das organische Lösungsmittel nicht vollständig entfernt, es bleiben beispielsweise 5 bis 10 Gew.-Teile organisches Lösungsmittel auf 100 Gew.-Teile des chlorierten Polymeren (vgl. DE-OS 2 359 461 = US-PS 4 144 203).

Zur Verwendung als Anstrichmittel löst man die chlorierten Polymere in einem gebräuchlichen Lacklösungsmittel, beispielsweise Toluol; dabei gelangen auch die noch vorhandenen Restmengen der zur Chlorierung verwendeten aliphatischen Chlorkohlenwasserstoffe in die Lösung und verdunsten beim Anstrich. Um dies zu vermeiden, muß man den Restgehalt an zur Chlorierung benutztem Lösungsmittel in den für Anstrichzwecke verwendeten chlorierten Polymeren reduzieren. Das gleiche gilt für die Verwendung in Druckfarben oder in Klebstoffen.

Es ist weiter bekannt (vgl. DE-OS 27 01 288 = US-PS 4 122 249), bei der Behandlung der Lösung des chlorierten Polymeren im chlorbeständigen organischen Lösungsmittel mit heißem Wasser oder Dampf der Lösung eine geringe Gewichtsmenge eines aliphatischen Alkohols mit mindestens 8, vorzugsweise 12 Kohlenstoffatomen zuzusetzen, um den Restgehalt an zur Chlorierung benutztem aliphatischen Chlorkohlenwasserstoff in dem chlorierten Polymeren auf 0,1 bis 3,1 Gew.-% zu reduzieren. Dieses Verfahren besitzt aber den Nachteil, daß das ausgefällte produkt dazu neigt, an den Wandungen des Ausfällbehälters zu haften. Darüber hinaus erscheint eine weitere Reduzierung des Restlösungsmittelgehaltes wünschenswert.

Geringere Lösungsmittelgehalte erzielt man (vgl. DE-OS 28 18 647 = US-PS 4 172 104) bei der Behandlung der Lösung des chlorierten Polymeren im aliphatischen Chlorkohlenwasserstoff mit heißem Wasser oder Dampf in Gegenwart einer geringen Gewichtsmenge eines Oxethylierungsproduktes aus einem Mol eines primären aliphatischen Monoalkohols mit mindestens 8 Kohlenstoffatomen und 2 - 20 Mol Ethylenoxid, wobei Lackfilme entstehen, die eine schlechtere Wasserfestigkeit aufweisen als entsprechende Filme von chlorierten Polymeren ohne Additive. Der Restgehalt an aliphatischem Chlorkohlenwasserstoff, z. B. Tetrachlorkohlenstoff soll nach diesem Verfahren auf $\leqslant$ 0,1 Gew.-% abgesenkt werden können.

Die zur Reduzierung des Restlösungsmittelgehaltes den aliphatischen Chlorkohlenwasserstofflösungen des aliphatischen chlorierten Polymeren zugesetzten Hilfsmittel verbleiben auch nach der Aufarbeitung größtenteils im chlorierten Polymeren und führen zu einer unerwünschten Herabsetzung des Erweichungspunktes des chlorierten Polymeren.

Gemäß dem Verfahren der FR-PS 14 24 790 (= CA-PS 784 601) werden konzentrierte Lösungen von chlorierten, aliphatischen Polymeren in aromatischen Kohlenwasserstoffen (z. B. Toluol), hochsiedenden Carbonsäureestern und Ketonen hergestellt, die frei von Feuchtigkeit und Verunreinigungen sein sollen, indem gemäß den Beispielen 100 Gew.-Teile von 10 gewichtsprozentigen Tetrachlorkohlenstofflösungen des chlorierten, aliphatischen Polymeren mit 40 bis 100 Gew.-Teilen eines der obengenannten, chlorfreien, höher als Tetrachlorkohlenstoff siedenden Lösungsmittel vermischt werden,und der Tetrachlorkohlenstoff über eine Kolonne fraktioniert abdestilliert wird. Das Verfahren weist jedoch eine Reihe von schwerwiegenden Mängeln auf.

Die auf diese Weise umgelösten Lösungen des chlorierten, aliphatischen polymeren in $CCl_4$-freien Lösungsmitteln neigen zu stärkerer Verfärbung und zeigen bei Verwendung als Unterwasseranstrichlacke eine starke Tendenz zur Unterwanderung infolge Korrosion der Auftragsflächen (s. Vergleichsbeispiel).

Aufgabe der vorliegenden Erfindung ist es, ein wirtschaftliches, im technischen Maßstab durchführbares, reproduzierbares Verfahren zur Isolierung von pulverförmigen, chlorierten, aliphatischen Polymeren aus ihren aliphatischen Chlorkohlenwasserstofflösungen bereitzustellen. Die pulverförmigen chlorierten Polymeren sollen praktisch frei ($\leqslant$ 20 ppm) von aliphatischen-Chlorkohlenwasserstoffen sein und frei von Additiven zur Verminderung des Gehaltes an Chlorkohlenwasserstoffen. Das chlorierte aliphatische Polymere soll weiter bei seiner Verwendung als Bindemittel in Überzugmitteln, Klebemitteln und Druckfarben keine eine Korrosion bewirkende Bestandteile abspalten, welche die Untergründe schädigen könnten.

Die Aufgabe wird durch das erfindungsgemäße Verfahren, wie nachstehend in der Definition der Erfindung präzisiert, gelöst.

Gegenstand der Erfindung ist somit ein Verfahren zur Isolierung von pulverförmigen, chlorierten, aliphatischen Polymeren aus ihren aliphatischen Chlorkohlenwasserstofflösungen durch Entfernen des

2

aliphatischen Chlorkohlenwasserstoffs auf einen gehalt $\leqslant$ 20 ppm mittels Wasserdampfdestillation sowie durch Abtrennen des ausgefallenen, chlorierten, aliphatischen Polymeren von der wäßrigen Phase und Trocknen, dadurch gekennzeichnet, daß man in die aliphatische Chlorlohlenwasserstofflösung des chlorierten, aliphatischen Polymeren ein Gemisch aus 10 bis 30 Gew.-% Wasserdampf und 90 bis 70 Gew.-% eines organischen Lösungsmittels A, gegebenenfalls in Dampfform

- das organische Lösungsmittel A ist ein Lösungsmittel für das chlorierte, aliphatische Polymere, enthält kein aliphatisch gebundenes Halogen und besitzt einen höheren Siedepunkt als der aliphatische Chlorkohlenwasserstoffeinbringt, durch Wasserdampfdestillation den aliphatischen Chlorkohlenwasserstoff mit einem azeotropischen Wasseranteil entfernt und in bekannter Weise die erhaltene 70 bis 90 gewichtsprozentige wäßrige Dispersion des im Lösungsmittel A gelösten, chlorierten, aliphatischen Polymeren in kochendes Wasser als Fällbad einbringt, Lösungsmittel A durch Wasserdampfdestillation entfernt und das ausgefallene chlorierte, aliphatische Polymere isoliert und trocknet.

Die Herstellung der chlorierten, aliphatischen Polymeren mit Chlorgehalten von etwa 30 bis 70 Gew.-% in aliphatischen Chlorkohlenwasserstoffen erfolgt nach bekannten Verfahren, beispielsweise gemäß DE-OS 2 359 461.

Als aliphatische Polymere für die Chlorierung kommen beispielsweise Naturkautschuk, Polyisopren, Polybutadien, Polyethylen, Polypropylen, Ethylen/Propylen-Copolymerisate oder deren Mischungen infrage.

Unter aliphatischen Chlorkohlenwasserstoffen werden beispielsweise Tetrachlorkohlenstoff, Trichlorethylen, Chloroform, 1,2-Dichlorethan, Tetrachlorethan oder Methylenchlorid, vorzugsweise Tetrachlorkohlenstoff, verstanden.

Als Lösungsmittel A, die für das erfindungsgemäße Verfahren geeignet sind, seien beispielsweise Toluol, Xylol, Chlorbenzol, Butylacetat, Solventnaphtha, vorzugsweise Toluol, genannt.

Die erfindungsgemäß einzusetzenden aliphatischen Chlorkohlenwasserstoffe bzw. die zu verwendenden Lösungsmittel A bilden mit Wasser in der Dampfphase jeweils ein binäres azeotropes Gemisch. Um das Verfahren der Erfindung durchführen zu können, muß der Siedepunkt des Azeotrops aus aliphatischem Chlorkohlenwasserstoff und Wasser stets niedriger liegen als der Siedepunkt des Azeotrops aus Lösungsmittel A und Wasser.

Die Konzentrationen, in denen die chlorierten, aliphatischen Polymere in den aliphatischen Chlorkohlenwasserstoffen für das erfindungsgemäße Verfahren eingesetzt werden, sind nicht kritisch, vorzugsweise beträgt der Feststoffgehalt jedoch 5 bis 30 Gew.-%.

Das für das erfindungsgemäße Verfahren zu verwendende Dampfgemisch aus Lösungsmittel A und Wasser kann in seiner Zusammensetzung sehr unterschiedlich sein, zweckmäßig jedoch liegt sein Wasserdampfanteil zwischen 10 und 30 Gew.-%. Dabei ist es auch möglich, das Lösungsmittel A in flüssiger Form zuzugeben, da durch den eingeblasenen Wasserdampf stets ein azeotropes Dampfgemisch mit dem Lösungsmittel A gebildet wird.

Das erfindungsgemäße Verfahren kann chargenweise in einem mit einer Rektifizierkolonne versehenen Rührbehälter betrieben werden oder - besonders vorteilhaft- kontinuierlich in einer Abtriebskolonne, die von oben mit der gegebenenfalls stabilisierten Lösung des chlorierten Polymeren in einem aliphatischen Chlorkohlenwasserstoff beschickt wird, während von unten im Gegenstrom ein Gemisch von Wasserdampf und dem austauschenden Lösungsmittel eingeleitet wird.

Um eine Korrosion durch abgespaltenen Chlorwasserstoff in aus korrodierbaren Metallen bestehenden Aufarbeitungsanlagen zu vermeiden, ist es vorteilhaft, die bei der Chlorierung anfallende Lösung des chlorierten Polymeren in dem aliphatischen Chlorkohlenwasserstoff schon vor der Heißwasserfällung mit einer gewissen Menge einer wäßrigen Alkalimetallhydroxidlösung oder Alkalimetallcarbonatlösung zu emulgieren. Normalerweise wird hierfür der Zusatz von 1 bis 5 Gew.-%, bezogen auf das Gewicht der Lösung der chlorierten Polymeren in aliphatischem Chlorkohlenwasserstoff, einer 2 bis 10 %igen Sodalösung zu einer 5 bis 30 gewichtsprozentigen Lösung von chlorierten aliphatischen Polymeren in aliphatischem Chlorkohlenwasserstoff ausreichen. Natürlich kann die vorstehend beschriebene Stabilisierungsmaßnahme auch beim Arbeiten in nichtkorrodierbaren Vorrichtungen durchgeführt werden.

Das bei der Ausfällung des chlorierten Polymeren aus seiner Lösung in Lösungsmittel A durch Behandeln mit kochendem Wasser anfallende Dampfgemisch, bestehend aus Wasser und Lösungsmittel A, kann zwecks Energieersparnis direkt wieder im erfindungsgemäßen Verfahren verwendet werden. Die im Beispiel und im Vergleichsversuch angegebenen prozente beziehen sich auf das Gewicht.

## Beispiel

In eine Füllkörperkolonne (aus Glas) mit 25 theoretischen Böden (Laborkolonne mit Innendurchmesser von 35 mm) wurden von oben 2.145 g/h einer 20 %igen Lösung von chloriertem Kautschuk (Chlorgehalt ca. 67 %, cis-1,4-Poly-isopren) in Tetrachlorkohlenstoff eindosiert, während in den Sumpf der Kolonne ein Toluol-Wasserdampfgemisch aus 1.300 g/h Toluol und 380 g/h Wasserdampf eingeleitet wurde.

Als Sumpfprodukt wurden kontinuierlich 2.065 g/h einer wäßrigen Emulsion, bestehend aus einer 25 %igen Pergut-Toluollösung und ca. 16 % Wasser, ausgetragen, während über Kopf 1.716 g/h Tetrachlorkohlenstoff zusammen mit 75 g/h Wasser abdestillierten.

In wiederholten mehrstündigen Versuchen (je 6 Stunden) konnten die Reproduzierbarkeit und der praktisch vollständige Lösungsmittelaustausch nachgewiesen werden, wie die folgende Tabelle zeigt:

| Versuch Nr. | Temperaturmeßstellen (°C) | | | | $CCl_4$-Gehalt im Sumpfprodukt | Toluol-Gehalt im Destillat |
|---|---|---|---|---|---|---|
| | 1 | 2 | 3 | 4 | | |
| 1 | 84,5 | 69,1 | 67,5 | 66,1 | 100 ppm | ≰ 10 ppm |
| 2 | 84,3 | 68,8 | 67,2 | 66,0 | 70 " | ≰ 10 " |
| 3 | 84,4 | 69,0 | 66,9 | 65,9 | 300 " | ≰ 10 " |
| 4 | 84,5 | 68,5 | 67,1 | 66,0 | 150 " | ≰ 10 " |
| 5 | 84,5 | 68,6 | 67,2 | 66,0 | 100 " | ≰ 10 " |

Die Temperaturmeßstellen in der Kolonne verteilen sich wie folgt:

| | | |
|---|---|---|
| Meßstelle | 1 | Sumpf der Kolonne |
| " | 2 | unteres Drittel der Kolonne |
| " | 3 | oberes Drittel der Kolonne |
| " | 4 | Kopf der Kolonne |

Die als Sumpfprodukt erhaltenen Dispersionen wurden auf einfache Weise durch Einrühren in kochendes Wasser ausgefällt und so lange nachgekocht, bis das Destillat frei von Toluol war. Danach wurde das ausgefällte Pulver-Korn-Gemisch abfiltriert und 24 h bei 95°C und 30 mbar getrocknet. In dem so gewonnenen chlorierten Kautschuk konnte analytisch kein Tetrachlorkohlenstoff ($\leqslant$ 20 ppm) festgestellt werden.

### Vergleichsversuch

In Analogie zu dem im französischen Patent 1 424 790 genannten Verfahren (Beispiel 1) wurde die in Beispiel 1 vorliegender Anmeldung beschriebene Apparatur 6 Stunden lang mit 2.145 g/h einer 20 %igen Lösung desselben Chlorkautschuktyps (Chlorgehalt ca. 67 %, cis-1,4-Polyisopren) in Tetrachlorkohlenstoff von oben beschickt, während von unten in die Kolonne 1.300 g/h wasserfreier Toluoldampf eingeleitet wurde. Dabei wurden im Sumpf der Kolonne Temperaturen zwischen 114 und 115°C gemessen, während das Destillat bei 77 bis 78°C (vorwiegend Tetrachlorkohlenstoff) überging.

Von den Kopf- und Sumpfprodukten wurden jeweils 4 proben nach gleichen Zeitabständen innerhalb der oben angegebenen 6 Stunden untersucht:

| Proben Nr. | 1 | 2 | 3 | 4 |
|---|---|---|---|---|
| Destillat: Toluolgehalt | 0,54 % | 2,1 % | 0,92 % | 1,6 % |
| Sumpf: $CCl_4$-Gehalt | 430 ppm | 320 ppm | 390 ppm | 350 ppm |
| Sumpf: Toluolgehalt | 24,9 % | 25,4 % | 25,0 % | 25,2 % |

### Vergleich der Produkte aus Beispiel 1 mit den Produkten des Vergleichsversuchs

Aus dem in Beispiel 1 durch Ausfällung hergestellten Pulver-Korn-Gemisch wurden 20 %ige Lösungen (A) in Toluol hergestellt.

Ebenfalls 20 %ige Lösungen (B) in Toluol wurden aus dem Sumpfprodukt des Vergleichsversuchs zubereitet.

Der Vergleich der Farbzahlen und des $CCl_4$-Gehaltes zeigt ein wesentlich (überraschend) besseres Eigenschaftsbild bei den Lösungen aus Beispiel 1:

|              | Jodfarbzahl | $CCl_4$-Gehalt |
|--------------|-------------|----------------|
| Lösungen (A) | 5 - 8       | $\leq$ 20 ppm  |
| Lösungen (B) | 12 - 15     | 240 bis 350 ppm |

Noch deutlicher zeigt sich der Qualitätsunterschied zwischen den Produkten bei der anwendungstechnischen Untersuchung als Anstrichlack. Dazu wurden gereinigte und entfettete Bleche mit drei Beschichtungen nach folgenden Standardrezepturen versehen:

| Rezeptur | Grund-beschich-tung Gew.-% | Zwischen-beschich-tung Gew.-% | Deck-beschich-tung Gew.-% |
|----------|------|------|------|
| Chlorkautschuk, 100 %ig, gemäß Beispiel 1 bzw. gemäß Vergleichsversuch | 10,0 | 14,5 | 15,1 |
| Weichmacher | 6,3 | 9,2 | 9,6 |
| Hydriertes Rizinusöl | 0,2 | 0,2 | 0,2 |
| Toluol | 32,3 | 35,1 | 38,7 |
| Bleimennige | 36,2 | - | - |
| Pigmente u. Füllstoffe | 8,6 | 31,0 | 36,4 |
| Plastorit | 2,0 | 2,7 | - |
| Talkum | 4,4 | 7,3 | - |
| gesamt | 100,0 | 100,0 | 100,0 |

Die lackierten Bleche wurden gemäß DIN 53 167 mit einer bis zum Metalluntergrund durchgehenden Ritzspur versehen und in 5 %iger Natriumchloridlösung bei Raumtemperatur gelagert. Nach 24 Tagen wurde die Unterwanderung (Ablösung) des Lackfilms gemessen:

| Beschichtungsmaterial | Unterwanderung nach 24 Tg. |
|-----------------------|----------------------------|
| Mit Chlorkautschuk gemäß Beispiel 1 | 0 bis 1 mm |
| Mit Chlorkautschuk gemäß Vergleichsversuch | 10 bis 12 mm |

Das Ergebnis zeigt, daß der Chlorkautschuk gemäß Beispiel 1 für Unterwasseranstriche gut verwendungsfähig ist, während der Chlorkautschuk gemäß Vergleichsversuch für Unterwasseranstriche unbrauchbar ist.

# 0 144 045

## Patentansprüche

1. Verfahren zur Isolierung von pulverförmigen, chlorierten, aliphatischen Polymeren aus ihren aliphatischen Chlorkohlenwasserstofflösungen durch Entfernen des aliphatischen Chlorkohlenwasserstoffs auf einen gehelt ⩽ 20 ppm mittels Wasserdampfdestillation sowie durch Abtrennen des ausgefallenen chlorierten, aliphatischen Polymeren von der wäßrigen Phase und Trocknen, dadurch gekennzeichnet, daß man in die aliphatische Chlorkohlenwasserstofflösung des chlorierten, aliphatischen Polymeren ein Gemisch aus 10 bis 30 Gew.-% Wasserdampf und 90 bis 70 Gew.-% eines organischen Lösungsmittels A, gegebenenfalls in Dampfform

- das organische Lösungsmittel A ist ein Lösungsmittel für das chlorierte, aliphatische Polymere, enthält kein aliphatisch gebundenes Halogen und besitzt einen höheren Siedepunkt als der aliphatische Chlorkohlenwasserstoff -

einbringt, durch Wasserdampfdestillation den aliphatischen Chlorkohlenwasserstoff mit einem azeotropischen Wasseranteil entfernt und in bekannter Weise die erhaltene 70 bis 90 gewichtsprozentige wäßrige Dispersion des im Lösungsmittel A gelösten, chlorierten, aliphatischen Polymeren in kochendes Wasser als Fällbad einbringt, Lösungsmittel A durch Wasserdampfdestillation entfernt und das ausgefallene chlorierte, aliphatische Polymer isoliert und trocknet.

2. Verfahren nach Anspruch 1, dadurch gekennzeichnet, daß der aliphatische Chlorkohlenwasserstoff Tetrachlorkohlenstoff ist.

3. Verfahren nach Anspruch 1, dadurch gekennzeichnet, daß das Lösungsmittel A Toluol ist.

4. Verfahren nach Anspruch 1, dadurch gekennzeichnet, daß man die aliphatische Chlorkohlenwasserstofflösung des chlorierten, aliphatischen Polymeren kontinuierlich in den oberen Teil einer Gegenstromkolonne einbringt, von unten kontinuierlich das Gemisch aus Wasserdampf und Lösungsmittel A, gegebenenfalls in Dampfform, einleitet, über den Kolonnenkopf das azeotropische Gemisch aus aliphatischem Chlorkohlenwasserstoff und Wasser und aus dem untersten Kolonnenteil die wäßrige Dispersion des im Lösungsmittel A gelösten, chlorierten, aliphatischen Polymeren kontinuierlich austrägt.

## Claims

1. Process for isolating pulverulent chlorinated aliphatic Polymers from their aliphatic chlorohydrocarbon solutions by removing the aliphatic chlorohydrocarbon to a content of ⩽ 20 ppm by means of steam distillation and by separating off the precipitated chlorinated aliphatic polymer from the aqueous phase and drying said polymer, characterised in that a mixture of 10 to 30 % by weight of steam and 90 to 70 % by weight of an organic solvent A, optionally in vapour form

- the organic solvent A is a solvent for the chlorinated aliphatic polymer, does not contain any aliphatically bonded halogen and has a higher boiling point than the aliphatic chlorohydrocarbon -

is introduced into the aliphatic chlorohydrocarbon solution of the chlorinated aliphatic polymer, the aliphatic chlorohydrocarbon is removed by steam distillation together with an azeotropic water content and, in a known manner, the resulting 70 to 90 per cent by weight aqueous dispersion of the chlorinated aliphatic polymer dissolved in solvent A is introduced into boiling water as the precipitation bath, solvant A is removed by steam distillation and the precipitated chlorinated, aliphatic polymer is isolated and dried.

2. Process according to Claim 1, characterised in that the aliphatic chlorohydrocarbon is carbon tetrachloride.

3. Process according to Claim 1, characterised in that solvent A is toluene.

4. Process according to Claim 1, characterised in that the aliphatic chlorohydrocarbon solution of the chlorinated aliphatic polymer is introduced continuously into the upper part of a countercurrent column, the mixture of steam and solvent A, optionally in vapour form, is passed in continuously from the bottom, the azeotropic mixture of aliphatic chlorohydrocarbon and water is discharged via the top of the column and the aqueous dispersion of the chlorinated, aliphatic polymer dissolved in solvent A is discharged continuously from the bottommost part of the column.

## Revendications

1. Procédé pour isoler des polymères aliphatiques chlorés en poudre de leurs solutions dans des hydrocarbures aliphatiques chlorés par élimination de l'hydrocarbure aliphatique chloré jusqu'à une teneur égale à 20 ppm au moyen d'une distillation à la vapeur d'eau ainsi que par séparation des polymères aliphatiqueschlorés précipités de la phase aqueuse et séchage, caractérisé en ce qu'on introduit dans la solution du polymère aliphatique chloré dans un hydrocarbure aliphatique chloré, un mélange de 10 à 30 % en poids de vapeur d'eau et de 90 à 70 % en poids d'un solvant organique A, éventuellement sous la forme de vapeur

- le solvant organique A est un solvant du polymère aliphatique chloré, il ne contient pas d'halogène en liaison aliphatique et il a un plus haut point d'ébullition que l'hydrocarbure aliphatique chloré -, on élimine par distillation à la vapeur d'eau l'hydrocarbure aliphatique chloré avec une proportion d'eau azéotrope et on introduit d'une manière connue la dispersion aqueuse obtenue, à 70-90 % en poids, du polymère aliphatique chloré dissous dans le solvant A, dans de l'eau bouillante comme bain précipitant, on élimine le solvant A par distillation à la vapeur d'eau et on isole et sèche le polymère aliphatique chloré précipité.

2. Procédé suivant la revendication 1, caractérisé en ce que l'hydrocarbure aliphatique chloré est le tétrachlorure de carbone.

3. Procédé suivant la revendication 1, caractérisé en ce que le solvant A est le toluène.

4. Procédé suivant la revendication 1, caractérisé en ce qu'on introduit la solution, dans un hydrocarbure aliphatique chloré, du polymère aliphatique chloré en continu dans la partie supérieure d'une colonne à contre-courant, on fait arriver continuellement par le bas le mélange de vapeur d'eau et de solvant A, éventuellement sous forme de vapeur, et on décharge en continu à la tête de la colonne le mélange azéotrope d'hydrocarbure aliphatique chloré et d'eau et à la partie la plus basse de la colonne, la dispersion aqueuse du polymère aliphatique chloré dissous dans le solvant A.